# EUROPÄISCHE PATENTSCHRIFT

(11) **EP 1 571 167 B1**
(45) Veröffentlichungstag und Bekanntmachung des Hinweises auf die Patenterteilung: **23.07.2008**
(21) Anmeldenummer: 05003490.9
(22) Anmeldetag: 18.02.2005
(51) Int. Cl.: C08G 18/10, C08G 18/42, C08J 9/04

(54) **Verfahren zur Herstellung von Hartschaumstoffen auf Isocyanatbasis**
Process for the preparation of rigid foams based on isocyanate
Procédé pour la préparation de mousses rigides à partir d'isocyanate

(30) Priorität: 05.03.2004 DE 102004011346
(43) Veröffentlichungstag der Anmeldung: 07.09.2005
(73) Patentinhaber: BASF SE, 67056 Ludwigshafen (DE)
(72) Erfinder: von Malotki, Peter Dr., 49448 Lemförde (DE); Hensiek, Rainer, 49328 Melle (DE); Lehmann, Pit, 49074 Osnabrück (DE)

(56) Entgegenhaltungen:
- EP-A- 0 745 627
- DE-A1- 10 022 276
- US-A1- 2003 134 923

## Beschreibung

Hartschaumstoffe auf Isocyanatbasis sind seit langem bekannt und werden in großem Umfang eingesetzt, beispielsweise in der Kühlgeräte- und der Bauindustrie. Ihre Herstellung erfolgt üblicherweise durch Umsetzung von Polyisocyanaten mit Verbindungen mit mindestens zwei mit Isocyanatgruppen reaktiven Wasserstoffatomen. Unter Hartschaumstoffen auf Isocyanatbasis werden im folgenden Polyurethan (PUR)-Schäumstoffe und Polyisocyanurat (PIR)-Schaumstoffe verstanden. Zum Einbau von Isocyanuratgruppen werden der Reaktionsmischung sogenannte Isocyanurat-Katalysatoren, zumeist Kaliumacetat, zugesetzt.

Als Verbindungen mit mindestens zwei mit Isocyanatgruppen reaktiven Wasserstoffatomen werden in der Technik zumeist Polyetheralkohole und/oder Polyesteralkohole eingesetzt.

Insbesondere die Polyolkomponenten von PIR-Schaumstoffen enthalten vorzugsweise Polyesteralkohole als Hauptbestandteil.

Die Polyesteralkohole wirken im Vergleich zu Polyetheralkoholen günstig auf die Flammwidrigkeit von PUR- oder PIR-Hartschaumstoffen. So kann in den PIR-Hartschaumstoffen auf Polyesterbasis die Brandschutzklasse E nach EN ISO 11925-2 ohne Brom enthaltende Flammschutzmittel erreicht werden. Prinzipiell sind gemäß WO 92/16573 auch flammgeschützte PIR-Schaumstoffe auf Basis von Polyesteralkoholen ohne halogenhaltige Flammschutzmittel möglich.

Als Polyesteralkohole werden vorzugsweise Veresterungsprodukte aus aromatischen Dicarbonsäuren, wie Phthalsäure und/oder Terephthalsäure mit aliphatischen Diolen, zumeist Diethylenglykol oder analogen Diolen mit mehr als 2 Oxyethylenbausteinen eingesetzt. Polyesteralkohole auf Basis aromatischer Dicarbonsäuren reduzieren die Brennbarkeit von PUR- und PIR-Hartschaumstoffen am stärksten. Allerdings können zur Herstellung der Polyolkomponenten von PIR-Systemen, wie in WO 97/48747 beschrieben, auch Polyester auf Basis von aliphatischen Diarbonsäuren eingesetzt werden.

Polyesteralkohole sind durch die stark polaren Esterbindungen und die primären OH-Gruppen sehr hydrophile Verbindungen. Polyesteralkohole mit Hydroxylzahlen im Bereich von 100 - 400 mgKOH/g sind hydrophiler als vergleichbare Polyetheralkohole mit analogen OH-Zahlen. Insbesondere werden zwischen den polaren Carbonsäuregruppen und den primären OH-Gruppen sehr starke Wasserstoffbrückenbindungen aufgebaut. Dadurch besitzen Polyesteralkohole im Vergleich zu Polyetheralkoholen mit vergleichbaren Molmassen und Funktionalitäten deutlich höhere Viskositäten. Diese Eigenschaften, die erhöhte Polarität und die Ausbildung von starken intermolekularen Wasserstoffbrückenbindungen, erschwert die Mischbarkeit mit unpolareren Verbindungen erheblich.

Polyisocyanate sind vergleichsweise wenig polare Substanzen. Dies zeigt sich daran, dass selbst Polyetheralkohole bei der Vermischung mit Polyisocyanaten auf Basis Diphenylmethandiisocyanaten (MDI) Emulsionen ergeben. Die Mischbarkeiten von Polyesteralkoholen mit den Polyisocyanaten auf Basis von MDI ist aufgrund der höheren Polaritätsdifferenz noch deutlich ungünstiger.

In der Praxis bringt diese schlechte Mischbarkeit eine Reihe von Nachteilen. So setzt die Reaktion zwischen den Polyesteralkoholen und den Polyisocyanaten erst nach einer im Vergleich zu den Polyetheralkoholen größeren Initiierungsphase ein. Danach läuft die Reaktion aufgrund der in den Polyesteralkoholen vorhandenen primären OH-Gruppen sehr schnell ab. Daraus resultiert das schlechtere Fließ- und Steigverhalten von Formulierungen auf Basis von Polyesteralkoholen. Systeme mit einem derartigen Steigprofil erfordern bei der Verarbeitung auf Doppelbandanlagen enge technologische Toleranzen.

Weiterhin führt das ungünstige Fließ- und Steigverhalten der Formulierungen zu stark gestreckten Zellen. Schaumstoffe mit gestreckten Zellen zeigen eine starke Anisotropie. Hartschaumstoffe mit einer ausgeprägten Anisotropie besitzen in Abhängigkeit von den räumlichen Richtungen unterschiedliche Eigenschaften. Insbesondere ergeben sich bei der Druckfestigkeit und dem Druck-E-Modul Unterschiede von mehr als 100 %. Bei kontinuierlich hergestellten Sandwich- und Dämmelementen ist die Richtung mit den niedrigsten Festigkeiten jedoch immer die wichtigste Richtung senkrecht zur Elementebene.

Auch zeigen übliche Hartschaumstoffe auf Basis Polyesteralkoholen eine deutlich gröbere und uneinheitlichere Zellstruktur als vergleichbare Hartschaumstoffe auf Basis von Polyetheralkoholen. Offensichtlich kommt es durch die relativ lang andauernden Inhomogenitäten zu ungleichmäßigen Reaktionsabläufen in den verschiedenen Zonen des Reaktionsgemisches. Diese ungleichmäßigen Reaktionsabläufe ergeben eine relativ ungleichmäßige Zellstruktur mit hohen Anteilen an gröberen Zellen. Schaumstoffe mit gröberen Zellen besitzen ungünstigere Wärmeleitfähigkeiten bzw. schlechtere Isoliereigenschaften.

In der Literatur wurde eine Reihe von Möglichkeiten zur Verbesserung der Mischbarkeit von Polyesteralkoholen mit MDI beschrieben.

So werden in WO 99/19377 Polyesteralkohole in Kombination mit speziellen Emulgatoren eingesetzt. Solche Emulgatoren können die Problematik der Mischbarkeit jedoch nicht prinzipiell lösen. Durch Einsatz spezieller Emulgatoren wird lediglich die Tröpfchengröße der im Polyisocyanat emulgierten Polyesteralkohole gesteuert. Die Emulgatoren sind Verbindungen mit langen aliphatischen Ketten, die natürlich auch als partielle Weichmacher wirken. So werden bei Einsatz höherer Mengen dieser Emulgatoren eine Reihe von Schaumstoffeigenschaften negativ beeinflusst. Insbesondere aber verschlechtert sich durch den Einsatz derartiger Emulgatoren das Brandverhalten der resultierenden Hartschaumstoffe. Der zur Einstellung bestimmter Flammwidrigkeiten erforderliche Anteil an Flammschutzmittel muss bei Einsatz von Emulgatoren erhöht werden.

Weiterhin wurde die Verbesserung der Mischbarkeit mit dem eingesetzten Treibmittel untersucht. Vor 1990 beschäftigten sich diese Arbeiten überwiegend mit der Verbesserung der Mischbarkeit des Polyolgemisches mit R 11 (Trichlorfluormethan). In den letzten Jahren liegt der Schwerpunkt der Arbeiten auf die Sicherung einer ausreichenden Vermischung des Polyolgemisches mit aliphatischen Kohlenwasserstoffen, insbesondere Pentan.

Eine Verbesserung der Mischbarkeit von Polyesteralkoholen mit den hydrophoberen Treibmitteln kann durch den Einbau hydrophober Bausteine erreicht werden. Übliche hydrophobe Bausteine sind Fettsäuren oder Fettalkoholradikale. Der Einsatz von Polyesteralkoholen mit Fettsäureradikalen im Molekül ist schon lange bekannt. So werden mit Fettsäureradikalen modifizierte Polyesteralkohole zur Herstellung von PIR-Schaumstoffen in DE 31 15 409, US 4,644,048 und US 4,897,429 beschrieben.

In den letzten Jahren gibt es eine Reihe von Veröffentlichungen zur Verbesserung der Mischbarkeit von Polyesteralkoholen mit den noch unpolareren Pentanen. So wird der Einsatz von mit Fettsäureradikalen modifizierten Polyestern zur Herstellung von PUR- und PIR-Hartschaumstoffen mit Pentan in EP 624619, DE 19742012, WO 02/58383 und WO 00/61654 beschrieben.

Prinzipiell wird, auch wenn dies in den angeführten Arbeiten nicht hervorgehoben wird, durch den Einbau unpolarer Strukturbausteine in die polaren Polyesteralkohole auch deren Mischbarkeit mit den relativ unpolaren Polyisocyanaten verbessert. So wird insbesondere auch bei Anwendung der mit Fettsäureradikalen modifizierten Polyesteralkohole eine sehr feinzellige und gleichmäßige Zellstruktur erreicht.

Allerdings weisen die mit Fettsäureradikalen modifizierten Polyesteralkohole einen verringerten Aromatengehalt und eine verminderte Anzahl von Esterbindungen auf. Durch die hohen Anteile an aliphatischen Strukturen in den Polyesteralkoholen verschlechtert sich deren Flammwidrigkeit signifikant. So sind zur Einstellung bestimmter Flammwidrigkeiten erhöhte Anteile an Flammschutzmitteln notwendig. Dies wiederum steht dem Ziel des Einsatzes von Polyesteralkoholen, nämlich einer Reduzierung der Flammschutzmittelanteile im PUR- oder PIR-Hartschaumstoff, entgegen.

Weiterhin wirken die langen aliphatischen Ketten in den Polyesteralkoholen auch als Weichmacher. So werden entsprechend der Anteile von Fettsäureradikalen im Polyesteralkohol auch wichtige mechanische Eigenschaften, wie die Druckfestigkeit und der Druck-E-Modul deutlich verschlechtert.

Daher war es Aufgabe der vorliegenden Erfindung, die Mischbarkeit von Polyesteralkoholen mit den Treibmitteln und den Polyisocyanaten, insbesondere solchen auf Basis von MDI, zu verbessern und damit die Nachteile bei der Verwendung von Polyesteralkoholen in Hartschaumstoffen auf lsocyanatbasis zu minimieren. Insbesondere sollten Schaumstoffe bereitgestellt werden, die auch ohne die Verwendung von Brom enthaltenden Flammschutzmitteln gute Brandeigenschaften aufweisen und verbesserte mechanische Eigenschaften besitzen.

Die Aufgabe konnte überraschenderweise dadurch gelöst werden, dass Polyesteralkohole enthaltende Polyolgemische oder Polyesteralkohole zunächst mit einem stöchiometrischen Unterschuss an Isocyanaten umgesetzt und diese Umsetzungsprodukte, im folgenden Prepolymere genannt, mit weiteren Zusatzstoffen gemischt und mit Polyisocyanaten zu den Schaumstoffen auf Isocyanatbasis umgesetzt werden.

Gegenstand der Erfindung ist somit ein Verfahren zur Herstellung von Hartschaumstoffen auf Isocyanatbasis durch Umsetzung von Polyisocyanaten mit Verbindungen, die mindestens zwei gegenüber Isocyanatgruppen reaktive Wasserstoffatome besitzen und von denen mindestens eine ein Polyesteralkohol ist. Das Verfahren umfasst die Schritte:
A) Umsetzung eines Polyesteralkohols oder eines mindestens einen Polyesteralkohol enthaltenden Polyolgemisches mit einem stöchiometrischen Unterschuss mindestens eines mindestens difunktionellen Isocyanats zu einem Urethangruppen und Hydroxylgruppen enthaltenden Prepolymeren, mit einer Hydroxylzahl im Bereich zwischen 100 und 400 mgKOH/g,
B) Umsetzung des Prepolymeren aus Schritt A) mit Polyisocyanat zum Hartschaumstoff auf Isocyanatbasis.

Gegenstand der Erfindung sind weiterhin Hartschaumstoffe auf Isocyanatbasis, herstellbar nach diesem Verfahren.

Gegenstand der Erfindung sind weiterhin Urethangruppen und Hydroxylgruppen enthaltende Prepolymere mit einer Hydroxylzahl im Bereich zwischen 100 und 400 mg KOH/g, herstellbar durch Umsetzung eines Polyesteralkohols oder eines mindestens einen Polyesteralkohol enthaltenden Polyolgemisches mit mindestens einem mindestens difunktionellen Isocyanat.

Die zur Herstellung der Urethangruppen und Hydroxylgruppen enthaltenden Prepolymere eingesetzten Polyesteralkohole können nach üblichen und bekannten Verfahren durch Umsetzung von Carbonsäuren und/oder deren Anhydriden mit mindestens difunktionellen Alkoholen hergestellt werden. Dieses Verfahren ist beispielsweise beschrieben im Kunststoff-Handbuch, Band 7, Polyurethane, Carl Hanser Verlag München Wien, 3. Auflage 1993, Kapitel 3.1.2..

Als Carbonsäuren können aliphatische und/oder aromatische Carbonsäuren eingesetzt werden.

Bevorzugt eingesetzte aromatische Carbonsäuren sind Phthalsäure, Terephthalsäure und/oder Phthalsäureanhydrid. Die aromatischen Polyesteralkohole können auch durch Umesterung von Polyalkylenterephthalat, insbesondere Polyethylenterephthalat und/oder Polypropylenterephthalat, die insbesondere beim Recycling von Getränkeflaschen anfallen, hergestellt werden.

Bevorzugt eingesetzte aliphatische Carbonsäuren sind Adipinsäure und/oder Fettsäuren mit mehr als 8 Kohlenstoffatomen, wie Ricinolsäure, Tallölfettsäure und Ölsäure. Es können auch monofunktionelle Fettsäuren eingesetzt werden. Diese müssen jedoch in einer solchen Menge eingesetzt werden, dass die resultierenden Prepolymere freie Hydroxylgruppen aufweisen. Vorzugsweise werden die monofunktionellen Fettsäuren im Gemisch mit mehrfunktionellen Carbonsäuren eingesetzt. An Stelle der Fettsäuren können auch deren Triester mit Glyzerin eingesetzt werden.wie z. B. Ricinusöl und Leinöl. Als mindestens difunktionelle Alkohole für die Herstellung der Polyesteralkohole werden vorzugsweise zwei- und dreifunktionelle Alkohole, insbesondere solche mit einem Molekulargewicht bis 400 g/mol, verwendet. Beispiele hierfür sind Ethylenglykol und seine höheren Homologen, Propylenglykol und seine höheren Homologen, Butandiol, Pentandiol, Hexandiol, Glyzerin, Trimethylolpropan.

Die zur Herstellung der Prepolymere in Schritt A) eingesetzten Polyesteralkohole haben zumeist eine Hydroxylzahl im Bereich zwischen 150 und 400 mgKOH/g.

Zur Herstellung der Prepolymere in Schritt A) werden die Polyesteralkohole mit mindestens difunktionellen Isocyanaten umgesetzt. Als Isocyanate in Schritt A) können die üblichen und bekannten aliphatischen und vorzugsweise aromatischen zwei- oder höherfunktionellen Isocyanate eingesetzt werden. Bevorzugt eingesetzt werden Toluylendiisocyanat (TDI), Diphenylmethandiisocyanat (MDI) und/oder Mischungen aus Diphenylmethandiisocyanat und Polymethylen-polyphenylen-polyisocyanaten (PMDI). Die Isocyanate werden vorzugsweise in einer Menge von 0,2 bis 10 Gew.-%, besonders bevorzugt in einer Menge von 0,3 bis 8 Gew.-% und insbesondere in einer Menge von 0,5 bis 6 Gew.-%, jeweils bezogen auf das Gewicht der Polyesteralkohole, eingesetzt.

Die Umsetzung erfolgt zumeist bei einer Temperatur im Bereich von 20 bis 60°C. Zur Umsetzung wird üblicherweise der Polyesteralkohol vorgelegt und unter Rühren das Isocyanat zugegeben. Die Umsetzung kann unkatalysiert oder in Anwesenheit von üblichen Urethanisierungskatalysatoren durchgeführt werden.

Durch die Umsetzung mit dem Isocyanat kommt es zu einer Verringerung der Hydroxylzahl und einer Erhöhung der Viskosität im Vergleich zu den nicht umgesetzten Polyesteralkoholen. Auf Grund der relativ geringen Mengen an Isocyanat bleibt die Viskosität jedoch stets in einem für die Herstellung der Schaumstoffe verarbeitbaren Bereich.

Die in Schritt A) hergestellten Prepolymere haben zumeist einen Gehalt an Urethangruppen enthaltenden Anteilen von 1 bis 45 Gew.-%, vorzugsweise 1,5 bis 33 Gew.-%, jeweils bezogen auf das Gewicht des Prepolymeren. Höhere Gehalte sind prinzipiell möglich, allerdings kommt es dann zu einem sehr starken Anstieg der Viskosität der Prepolymeren. Der Gehalt an Urethangruppen errechnet sich aus der mittleren Molmasse der eingesetzten Polyole und der eingesetzten Isocyanate. Auf Grund des hohen Überschusses an Hydroxylgruppen kann davon ausgegangen werden, dass jede Isocyanatgruppe eines Isocyanatmoleküls mit einem Polyolmolekül reagiert. Die in den Polyesteralkoholen immer enthaltenden Moleküle der nicht umgesetzten niedermolekularen Alkohole reagieren entsprechend ihrer molaren Anteile im Polyesteralkohol mit den Isocyanatgruppen.

Die in Schritt A) hergestellten Prepolymere können sofort in Schritt B) zu den Schaumstoffen weiterverarbeitet werden. Es ist jedoch auch möglich, die Schritte A) und B) räumlich und zeitlich getrennt voneinander durchzuführen. So kann beispielsweise in Schritt A) Prepolymer auf Vorrat hergestellt und bis zu seinem Einsatz in Schritt B) gelagert werden. Die Prepolymere sind lagerstabil und ändern ihre Kennzahlen während der Lagerung kaum.

Zur Herstellung der erfindungsgemäßen Hartschaumstoffe auf Isocyanatbasis werden die in Schritt A) hergestellten Prepolymere, gegebenenfalls in Kombination mit weiteren Verbindungen mit mindestens zwei mit Isocyanatgruppen reaktiven Wasserstoffatomen, mit Polyisocyanaten umgesetzt. Die Umsetzung erfolgt in Anwesenheit von Treibmitteln, Katalysatoren sowie anderen üblichen Hilfs- und/oder Zusatzstoffen.

Zu den zur Herstellung der Hartschaumstoffe eingesetzten Verbindungen ist im einzelnen folgendes zu sagen.

Als organische Polyisocyanate kommen die an sich bekannten aliphatischen, cycloaliphatischen, araliphatischen und vorzugsweise aromatischen mehrwertigen Isocyanate in Betracht.

Im einzelnen seien beispielhaft genannt: Alkylendiisocyanate mit 4 bis 12 Kohlenstoffatomen im Alkylenrest, wie z.B. Hexamethylen-diisocyanat-1,6; cycloaliphatische Diisocyanate, wie z.B. Cyclohexan-1,3- und -1,4-diisocyanat sowie beliebige Gemische dieser Isomeren, 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, araliphatische Diisocyanate, wie z.B. 1,4-Xylylen-diisocyanat und Xylylen-diisocyanat-Isomerengemische, vorzugsweise jedoch aromatische Di- und Polyisocyanate, wie z.B. 2,4- und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Mischungen aus 4,4'- und 2,4'-Diphenylmethan-diisocyanaten, Polyphenyl-polymethylen-polyisocyanate und dessen Mischungen mit 4,4'-, 2,4'- und 2,2'-Diphenylmethan-diisocyanaten (Roh-MDI) und Mischungen aus Roh-MDI und Toluylendiisocyanaten. Bevorzugt wird Roh-MDI eingesetzt. Die organischen Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Isocyanurat- und/oder Urethangruppen enthaltende Di- und/oder Polyisocyanate. Im einzelnen kommen beispielsweise in Betracht Urethangruppen enthaltende organische, vorzugsweise aromatische Polyisocyanate mit NCO-Gehalten von 33 bis 15 Gew.-%, vorzugsweise von 31 bis 21 Gew.-%, bezogen auf das Gesamtgewicht des Polyisocyanats. Geeignet sind auch Isocyanatgruppen enthaltende Prepolymere mit NCO-Gehalten von 25 bis 3,5 Gew.-%, vorzugsweise von 21 bis 14 Gew.-%, bezogen auf das Gesamtgewicht des Polyisocyanats, hergestellt aus Polyester- und/oder vorzugsweise Polyetherpolyolen und 4,4'-Diphenylmethan-diisocyanat, Mischungen aus 2,4'- und 4,4'-Diphenylmethandiisocyanat, 2,4- und/oder 2,6-Toluylen-diisocyanaten oder Roh-MDI. Bewährt haben sich ferner flüssige, Isocyanuratringe enthaltende Polyisocyanate mit NCO-Gehalten von 33 bis 15, vorzugsweise 31 bis 21 Gew.-%, bezogen auf das Gesamtgewicht des Polyisocyanats, z. B. auf Basis von 4,4'-, 2,4'- und/oder 2,2'-Diphenylmethan-düsocyanat und/oder 2,4- und/oder 2,6-Toluylen-diisocyanat.

Die modifizierten Polyisocyanate können miteinander oder mit unmodifizierten organischen Polyisocyanaten wie 2,4'-, 4,4'-Diphenylmethan-diisocyanat, Roh-MDI, 2,4-und/oder 2,6-Toluylen-diisocyanat gegebenenfalls gemischt werden.

Als Verbindungen mit mindestens zwei mit Isocyanat reaktiven Wasserstoffatomen, die gemeinsam mit den Prepolymeren aus Schritt A) eingesetzt werden, kommen insbesondere Polyetheralkohole und/oder Polyesteralkohole zum Einsatz. Der Anteil der Prepolymere an den Verbindungen mit mindestens zwei mit Isocyanatgruppen reaktiven Wasserstoffatomen beträgt üblicherweise 10 bis 100 Gew.-%.

Die eingesetzten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

In einer bevorzugten Ausführungsform des erfindungsgemäßen Verfahrens werden als Polyesteralkohole die gleichen Produkte verwendet, die zur Herstellung der Prepolymere in Schritt A) eingesetzt werden.

In einer weiteren bevorzugten Ausführungsform des erfindungsgemäßen Verfahrens wird die gesamte Menge des für die Herstellung des Hartschaumstoffs eingesetzten Polyesteralkohols in Schritt A) mit Isocyanaten umgesetzt, so dass keine weiteren Verbindungen mit mindestens zwei mit Isocyanatgruppen Wasserstoffatomen eingesetzt werden.

Die eingesetzten Polyetheralkohole haben zumeist eine Funktionalität zwischen 2 und 8, insbesondere 4 bis 8.

Bei der Herstellung der erfindungsgemäßen Polyurethan-Hartschaumstoffe auf Isocyanatbasis wird zumeist mindestens ein Polyetheralkohol eingesetzt, der eine Funktionalität von mindestens 2 bis 6 und eine Hydroxylzahl größer 200 mg KOH/g aufweist.

Insbesondere als Polyhydroxylverbindungen verwendet werden Polyetherpolyole, die nach bekannten Verfahren, beispielsweise durch anionische Polymerisation von Alkylenoxiden in Gegenwart von Alkalihydroxiden, hergestellt werden.

Als Alkylenoxide werden vorzugsweise Ethylenoxid und 1,2-Propylenoxid eingesetzt. Die Alkylenoxide können einzeln, alternierend nacheinander oder als Mischungen verwendet werden.

Als Startermoleküle kommen beispielsweise in Betracht: Wasser, organische Dicarbonsäuren, wie z.B. Bernsteinsäure, Adipinsäure, Phthalsäure und Terephthalsäure, aliphatische und aromatische, gegebenenfalls N-mono-, N,N- und N,N'-dialkyl-substituierte Diamine mit 1 bis 4 Kohlenstoffatomen im Alkylrest, wie z.B. gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Anilin, Phenylendiamine, 2,3-, 2,4-, 3,4- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl- und N-Ethylethanolamin, Dialkanolamine, wie Diethanolamin, N-Methyl- und N-Ethyldiethanolamin und Trialkanolamine wie z.B. Triethanolamin und Ammoniak.

Weiterhin können mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Pentaerythrit, Sorbit und Saccharose, mehrwertige Phenole, wie z.B. 4,4'-Dihydroxy-diphenylmethan und 4,4'-Dihydroxy-diphenylpropan-2,2, Resole, wie z.B. oligomere Kondensationsprodukte aus Phenol und Formaldehyd und Mannich-Kondensate aus Phenolen, Formaldehyd und Dialkanolaminen sowie Melamin eingesetzt werden.

Die Polyetherpolyole besitzen eine Funktionalität von vorzugsweise 2 bis 8 und insbesondere 2 und 5 und Hydroxylzahlen von vorzugsweise 120 mgKOH/g bis 770 mgKOH/g und insbesondere 200 mgKOH/g bis 570 mgKOH/g.

Weitere Angaben zu den verwendeten Polyetheralkoholen und Polyesteralkoholen sowie ihrer Herstellung finden sich beispielsweise im Kunststoffhandbuch, Band 7 "Polyurethane", herausgegeben von Günter Oertel, Carl-Hanser-Verlag München, 3. Auflage, 1993.

Zu den Verbindungen mit mindestens zwei mit Isocyanatgruppen reaktiven Wasserstoffatomen b) gehören auch die gegebenenfalls mitverwendeten Kettenverlängerer und Vernetzer. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Sofern zur Herstellung der Hartschaumstoffe auf Isocyanatbasis Kettenverlängerungsmittel, Vernetzungsmittel oder Mischungen davon Anwendung finden, kommen diese zweckmäßigerweise in einer Menge von 0 bis 20 Gew.-%, vorzugsweise 2 bis 5 Gew.-%, bezogen auf das Gewicht der Verbindungen mit mindestens zwei mit Isocyanatgruppen reaktiven Wasserstoffatomen b), zum Einsatz.

Das erfindungsgemäße Verfahren wird üblicherweise in Anwesenheit von Treibmitteln, gegebenenfalls Katalysatoren sowie, falls erforderlich, Hilfs- und/oder Zusatzstoffen durchgeführt.

Als Treibmittel kann beispielsweise Wasser verwendet werden, das mit Isocyanatgruppen unter Abspaltung von Kohlendioxid reagiert. An Stelle von, vorzugsweise jedoch in Kombination mit Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Schaumbildungsreaktion verdampfen. Vorzugsweise liegt der Siedepunkt dieser Verbindungen unter 110°C, insbesondere unter 80 °C. Zu den physikalischen Treibmitteln zählen auch inerte Gase, die in die Einsatzkomponenten eingebracht bzw. in ihnen gelöst werden, beispielsweise Kohlendioxid, Stickstoff oder Edelgase.

Die bei Raumtemperatur flüssigen Verbindungen werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Als Beispiele seien genannt Propan, n-Butan, iso- und Cyclobutan , n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und Heptafluorpropan. Die genannten physikalischen Treibmittel können allein oder in beliebigen Kombinationen untereinander eingesetzt werden.

Als Katalysatoren werden insbesondere Verbindungen eingesetzt, welche die Reaktion der Isocyanatgruppen mit den mit Isocyanatgruppen reaktiven Gruppen stark beschleunigen. Solche Katalysatoren sind stark basische Amine, wie sekundäre aliphatische Amine, Imidazole, Amidine, sowie Alkanolamine oder organische Metallverbindungen, insbesondere organische Zinnverbindungen.

Zum Einbau von Isocyanuratgruppen werden spezielle Katalysatoren benötigt. Als Isocyanurat-Katalysatoren werden üblicherweise Metallcarboxylate, insbesondere Kaliumacetat und dessen Lösungen, eingesetzt.

Die Katalysatoren können, je nach Erfordernis, allein oder in beliebigen Mischungen untereinander eingesetzt werden.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Flammschutzmittel, Hydrolyseschutzmittel, Antistatika, fungistatisch und bakteriostatisch wirkende Mittel zum Einsatz.

Als Flammschutzmittel können organische Phosphorsäure- und/oder Phosphonsäureester zur Anwendung kommen. Vorzugsweise werden gegenüber Isocyanatgruppen nicht reaktive Verbindungen eingesetzt. Auch Chlor enthaltende Phosphorsäureester gehören zu den bevorzugten Verbindungen.

Typischer Vertreter dieser Gruppe von Flammschutzmitteln sind Triethylphosphat, Diphenylkresylphosphat, Tris-(Chlorpropyl)-phosphat sowie Diethylethanphosphonat.

Daneben können prinzipiell auch Brom enthaltende Flammschutzmittel zum Einsatz kommen. Als Brom enthaltende Flammschutzmittel werden vorzugsweise gegenüber der Isocyanatgruppe reaktive Gruppen aufweisende Verbindungen eingesetzt. Derartige Verbindungen sind Ester der Tetrabromphthalsäure mit aliphatischen Diolen und Alkoxylierungsprodukte des Dibrombutendiols. Auch Verbindungen, die sich aus der Reihe der bromierten, OH-Gruppen enthaltenden Neopentylverbindungen ableiten, können zur Anwendung kommen. Überraschenderweise hat es sich jedoch gezeigt, dass, insbesondere bei Einbau von Isocyanuratgruppen, auf die Verwendung von Halogen, insbesondere Brom enthaltenden Flammschutzmitteln völlig verzichtet werden kann.

Nähere Angaben über die zur Durchführung des erfindungsgemäßen Verfahrens eingesetzten Ausgangsstoffe, Treibmittel, Katalysatoren sowie Hilfs- und/oder Zusatzstoffe finden sich beispielsweise im Kunststoffhandbuch, Band 7, "Polyurethane" Carl-Hanser-Verlag München, 1. Auflage, 1966, 2. Auflage, 1983 und 3. Auflage, 1993.

Zur Herstellung der Polyurethan-Hartschaumstoffe werden die Polyisocyanate und die Verbindungen mit mindestens zwei mit Isocyanatgruppen reaktiven Wasserstoffatomen, wobei zu diesen auch die Prepolymere aus Verfahrensschritt A) gehören, in solchen Mengen zur Umsetzung gebracht, dass der Isocyanatindex in einem Bereich zwischen 100 und 220, vorzugsweise zwischen 115 und 195, liegt. Die Polyurethan-Hartschaumstoffe können diskontinuierlich oder kontinuierlich mit Hilfe bekannter Mischvorrichtungen hergestellt werden.

Bei der Herstellung der Polyisocyanuratschäume wird mit einem höheren Index, vorzugsweise im Bereich von 180 bis 450, gearbeitet.

Bevorzugt werden die erfindungsgemäßen Hartschaumstoffe auf kontinuierlich arbeitenden Doppelbandanlagen hergestellt. Hier werden mit einer Hochdruckmaschine die Polyol- und Isocyanatkomponente dosiert und in einem Mischkopf vermischt. Dem Polyolgemisch können zuvor mit separaten Pumpen Katalysatoren und /oder Treibmittel zudosiert werden. Das Reaktionsgemisch wird kontinuierlich auf die untere Deckschicht aufgetragen. Die untere Deckschicht mit dem Reaktionsgemisch und die obere Deckschicht laufen in das Doppelband ein. Hier schäumt das Reaktionsgemisch auf und härtet aus. Nach dem Verlassen des Doppelbandes wird der endlose Strang in den gewünschten Abmessungen zerschnitten. Auf diese Weise können Sandwichelemente mit metallischen Deckschichten oder Dämmelemente mit flexiblen Deckschichten hergestellt werden.

Die erfindungsgemäßen Hartschaumstoffe können auch als Zweikomponenten-Systeme zur diskontinuierlichen Herstellung von Sandwichbauteilen eingesetzt werden. Bei diesem Verfahren werden die Verbindungen mit mindestens zwei gegenüber Isocyanatgruppen reaktiven Wasserstoffatomen b) mit den Flammschutzmitteln, den Katalysatoren c), den Treibmitteln d), sowie den weiteren Hilfs- und/oder Zusatzstoffen zu einer sogenannten Polyolkomponente vermischt und diese mit den Polyisocyanaten oder Mischungen aus den Polyisocyanaten und gegebenenfalls Treibmitteln, auch als Isocyanatkomponente bezeichnet, zur Umsetzung gebracht.

Die Ausgangskomponenten werden zumeist bei einer Temperatur von 15 bis 35°C vorzugsweise von 20 bis 30°C gemischt. Das Reaktionsgemisch kann mit Hoch- oder Niederdruckdosiermaschinen in geschlossene Stützwerkzeuge gegossen werden. Nach dieser Technologie werden z. B. diskontinuierlich Sandwichelemente gefertigt

Die in Schritt A) hergestellten Prepolymeren weisen offensichtlich eine verbesserte Mischbarkeit mit dem Isocyanat und den eingesetzten Treibmitteln, insbesondere mit n-Pentan auf. Durch diese gute Vermischung der Reaktionsteilnehmer kommt es zu einem verbesserten Fließ- und Steigverhalten. Dies wird insbesondere bei den erfindungsgemäßen PIR-Schaumstoffen durch verbesserte mechanische Eigenschaften deutlich.

Wie oben dargelegt, weisen die nach dem erfindungsgemäßen Verfahren hergestellten Hartschaumstoffe auf Isocyanatbasis, insbesondere die PIR-Schaumstoffe, gute Flammschutzeigenschaften auf. Die Schaumstoffe erreichen auch ohne den Einsatz von Brom enthaltenden Flammschutzmitteln die Brandschutzklasse B2 nach DIN 4102. Insbesondere hinsichtlich der für die Verwendung der Schaumstoffe wesentlichen mechanischen Eigenschaften sind die nach dem erfindungsgemäßen Verfahren hergestellten Schaumstoffe den nach dem Stand der Technik hergestellten Produkten überlegen.

Die Erfindung soll an nachfolgenden Beispielen näher erläutert werden. Die nachfolgend aufgeführten Beispiele sollen die Erfindung erläutern ohne ihren Umfang einzuschränken.
a) Herstellung der Hydroxylgruppen und Urethangruppen enthaltenden Prepolymeren
   Die in Tabelle 1 beschriebenen Polyesteralkohole wurden mit den in Tabelle 2 angegebenen Isocyanaten in den in Tabelle 2 angegebenen Anteilen bei 45°C vermischt. Nach der Zugabe der Isocyanate wurde die Mischung noch 20 min gerührt und danach auf Raumtemperatur abkühlen gelassen.
b) Herstellung der Hartschaumstoffe

Die in Tabelle 3 angegebenen Polyole, Katalysatoren, Flammschutzmittel, Treibmittel und Zusatzstoffe wurden zu einer Polyolkomponente vermischt. Dazu wurden zunächst im angegebenen Verhältnis die Polyole und zu dieser Mischung die Zusatzstoffe, Katalysatoren und Pentan gemischt. Anschließend wurde dieses Gemisch mit dem Polyisocyanat so vermischt dass 400 g eines Reaktionsgemisches erhalten wurden. Das Reaktionsgemisch wurde in eine Aluminiumform der Abmessung 20 cm x 20 cm x 20 cm gegossen. Nach dem Aushärten wurden aus dem Schaumstoff die Prüfkörper zur Bestimmung der Rohdichte frei, des Brandverhaltens, der Druckfestigkeiten, der Zellgrößenverteilung und der Wärmeleitfähigkeit herausgesägt. Die Wärmeleitfähigkeit wurde in Schäumrichtung gemessen.

In analoger Weise wurden 80 g eines Reaktionsgemisches in einem Pappbecher mit einem Volumen von 660 cm³ verschäumt, wobei die Temperaturen der Ausgangskomponenten 20°C betrugen. Beim Aufschäumen des Reaktionsgemisches wurden die Reaktionsdaten bestimmt. Nach dem Aushärten wurde der über den Becherrand hinausstehende Schaumpilz abgeschnitten. Aus dem Gewicht des Schaums im Becher und dem Volumen wurde die Rohdichte des Schaumstoffes errechnet.

Die erhaltenen Ergebnisse sind in Tabelle 4 enthalten.

Die Ergebnisse zeigen, dass mit den nach dem erfindungsgemäßen Verfahren hergestellten PIR-Systemen generell die vorhanden physikalischen Treibmittel besser in niedrige Rohdichten umgesetzt werden können. So liegen die Rohdichten der erfindungsgemäßen Schaumstoffe im Vergleich zu den entsprechenden Vergleichsbeispielen um 0,4 bis 1,8 kg/m³ niedriger.

Die gemessenen Flammenhöhen sind generell auf einem sehr niedrigen Niveau. Wurde jedoch ein Fettsäure enthaltender Polyester allein eingesetzt (Vergleichsbeispiel 2), wurden zwar ähnlich niedrige Rohdichten gefunden wie z. B. mit dem erfindungsgemäßen Schaumstoff gemäß Beispiel 2, jedoch stieg die Flammenhöhe auf über 10 cm an.

Der Einsatz der erfindungsgemäßen Prepolymere in PIR-Systemen führte generell zu einer Absenkung der bei PIR-Schaumstoffen zumeist sehr ausgeprägten Anisotropie. Generell verbesserte sich im Vergleich zu den nicht erfindungsgemäßen Beispielen die Druckfestigkeit senkrecht zur Schäumrichtung. Zur Verdeutlichung der Wirkung wurde ein Anisotropiefaktor aus den Druckfestigkeiten in und senkrecht zur Schäumrichtung errechnet. Ein idealer Faktor sollte bei 1,0 liegen. In den erfindungsgemäß hergestellten Schaumstoffen lag der Anisotropiefaktor nur noch im Bereich von 2,14 bis 2,67, während die Schaumstoffe gemäß des Standes der Technik einen Anisotropiefaktor im Bereich von 2,70 bis 3,54 aufweisen (ein Faktor von 2,5 ist nur bei Verminderung der Flammenschutzwirkung möglich).

Dieser Effekt ist insbesondere für die kontinuierliche Herstellung von Dämm- und Sandwichelementen von Bedeutung. Durch den Herstellungsprozess weisen derartige Elemente senkrecht zur Plattenebene immer die ungünstigsten Druckfestigkeitswerte auf. Diese Richtung ist jedoch für die Tragfähigkeit der Sandwichelemente entscheidend.

**Tabelle 1: Übersicht der verwendeten Polyole, Flammschutzmittel, Katalysatoren, Stabilisatoren und Isocyanate**

| Rohstoffbezeichnung | Zusammensetzung | | OHZ mg KOH/g | NCO % |
|---|---|---|---|---|
| Polyol1 | Polyesteralkohol aus PSA und DEG | | 234 | |
| Polyol 11 | Polyesteralkohol aus PSA; DEG, TMP und Ölsäure | | 220 | |
| Polyol 16 | Polyesteralkohol aus ADS und DEG | | 288 | |
| Polyol 18 | Polyether aus DEG, PO und EO (EO:PO = 20 : 80) | | 50 | |
| Polyol 19 | Polyether aus EG und EO, MM 600 | | 190 | |
| Polyol 20 | Gemisch aus Polyol 1 und Polyol 19 im Verh. 85:15 | | 230 | |
| Flammschutzmittel 1 | Tris-(Chlorpropyl)-phosphat | | | |
| Flammschutzmittel 2 | Diethylethanphosphonat | | | |
| Flammschutzmittel 4 | Diphenylkresylphosphat | | | |
| Katalysator 2 | Dimethylcyclohexylamin | | | |
| PIR-Katalysator 1 | Kaliumacetat in EG (50%-ig) | | | |
| Schaumstabilisator | Siliciumorganisches Tensid, z.B. DC 193 der Fa. Air Produkts | | | |
| PMDI 1 | Isocanat auf Basis von polymerem MDI, Viskosität bei 25°C 200 mPas | | | 32,0 |
| Rein MDI | Isomeren-Gemisch aus 66% 4.4-MDI und 33% 2.4-MDI | | | 33,3 |
| TDI | Toluylendiisocyanat | | | 47,5 |
| | | | | |
| PSA - Phtalsäureanhydrid | | EG - Ethylenglykol | | |
| DEG - Diethylenglykol | | PO - Propylenoxid | | |
| TMP - Trimethylolpropan | | EO - Ethylenoxid | | |
| ADS - Adipinsäure | | | | |

**Tabelle 2: Zusammensetzung der Urethangruppen enthaltenden Polyesteralkohole**

| Polyol-Nr. | Zusammensetzung | OHZ mg KOH/g | Viskosität MPas (25°C) | Viskosität MPas (50°C) | Masse-%-Urethanverb. |
|---|---|---|---|---|---|
| Polyol 1 | Polyesteralkohol 1, Vergleichspolyol | 235 | 11300 | | 0,0 |
| Polyol 2 | Polyesteralkohol 1, Umsetzung mit 0,5 % PMDI | 228 | 12600 | | 2,3 |
| Polyol 3 | Polyesteralkohol 1, Umsetzung mit 1,5 % PMDI | 222 | 15650 | | 6,9 |
| Polyol 4 | Polyesteralkohol 1, Umsetzung mit 1,5 % rein MDI | 220 | 13300 | | 7,2 |
| Polyol 5 | Polyesteralkohol 1, Umsetzung mit 1,5 % TDII | 219 | 17800 | | 9,7 |
| Polyol 6 | Polyesteralkohol 1, Umsetzung mit 3,0 % PMDI | 212 | 24500 | | 13,9 |
| Polyol 7 | Polyesteralkohol 1, Umsetzung mit 3,0 % rein MDI | 213 | 22500 | | 14,3 |
| Polyol 8 | Polyesteralkohol 1, Umsetzung mit 3,0 % TDI | 208 | 43300 | | 19,5 |
| Polyol 9 | Polyesteralkohol 1, Umsetzung mit 4,0 % TDI | 197 | 59700 | | 25,9 |
| Polyol 10 | Polyesteralkohol 1, Umsetzung mit 5,0 % rein MDI | 201 | 41500 | | 23,8 |
| Polyol 11 | Polyesteralkohol 11, Vergleichspolyol -+ | 185 | 30000 | 2200 | 0,0 |
| Polyol 12 | Polyesteralkohol 11, Umsetzung mit 0,5 % PMDI | 178 | | 2450 | 2.7 |
| Polyol 13 | Polyesteralkohol 11, Umsetzung mit 1,5 % PMDI | 176 | | 3200 | 8,2 |
| Polyol 14 | Polyesteralkohol 11, Umsetzung mit 1,5% rein MDI | 172 | | 2950 | 8,5 |
| Polyol 15 | Polyesteralkohol 11, Umsetzung mit 3,0 % rein MDI | 160 | | 4380 | 17,0 |
| Polyol 16 | Polyesteralkohol 16, Vergleichspolyol | 288 | 322 | | 0,0 |
| Polyol 17 | Polyesteralkohol 16, Umsetzung mit 3,0 % PMDI | 266 | 465 | | 11,9 |
| Polyol 20 | Polyesteralkohol 20, Vergleichspolyol | 230 | 9500 | | 0,0 |
| Polyol 21 | Polyolgemisch 20, Umsetzung mit 3,0 % PMDI | 210 | 19700 | | 14,2 |

**Tabelle 3: Formulierungen für die Schaum herstellung (Angaben in Gew.-Teilen)**

| Beispiel | V1 | 1 | 2 | V2 | V3 | 3 | V4 | 5 | 6 | 7 | | 9 |
|---|---|---|---|---|---|---|---|---|---|---|---|---|
| Polyol 1 | 52,8 | | | | 32,8 | | 32,8 | | | | | 18 |
| Polyol 3 | | | | | | 32,8 | | 32,8 | | | | |
| Polyol 6 | | 52,8 | | | | | | | 52,8 | | | 23 |
| Polyol 7 | | | 52,8 | | | | | | | | | |
| Polyol 11 | | | | 52,8 | 20 | | | | | 25 | | 12 |
| Polyol 15 | | | | | | 20 | | | | | | 12,5 |
| Polyol 16 | | | | | | | 20 | | | | | |
| Polyol 17 | | | | | | | | 20 | | | | |
| Polyoll 18 | 15 | 15 | 15 | 15 | 15 | 15 | 15 | 15 | 15 | | | |
| Polyol 20 | | | | | | | | | | 47,8 | | |
| Flammschutzmittel 1 | 20 | 20 | 20 | 20 | 20 | 20 | 20 | 20 | | 20 | | 7,3 |
| Flammschutzmittel 2 | 5 | 5 | 5 | 5 | 5 | 5 | 5 | 5 | 5 | 5 | | 6,4 |
| Flammschutzmittel 3 | | | | | | | | | 20 | | | 9,1 |
| Silizium-Stabilisator | 2 | 2 | 2 | 2 | 2 | 2 | 2 | 2 | 2 | 2 | | 2 |
| Wasser | 0,2 | 0,2 | 0,2 | 0,2 | 0,2 | 0,2 | 0,2 | 0,2 | 0,2 | 0,2 | | |
| Polyolgemisch | 100 | 100 | 100 | 100 | 100 | 100 | 100 | 100 | 100 | 100 | | |
| | | | | | | | | | | | | |
| Katalysator 1 | 0,6 | 0,6 | 0,6 | 0,6 | 0,6 | 0,6 | 0,4 | 0,4 | 0,7 | 0,7 | | 1,2 |
| PIR- Katalysator 1 | 1,8 | 1,8 | 1,8 | 1,8 | 1,8 | 1,8 | 1,8 | 1,8 | 1,8 | 1,8 | | |
| n-Pentan | 16 | 16 | 16 | 16 | 16 | 16 | 16 | 16 | 16 | 16 | | 6,5 |
| | | | | | | | | | | | | |
| Isocyanat | 210 | 205 | 205 | 210 | 210 | 205 | 210 | 205 | 205 | 205 | | 185 |
| | | | | | | | | | | | | |

Die Beispiele mit der Bezeichnung V sind Vergleichsbeispiele.

**Tabelle 4: Reaktionsprofile, Rohdichten und Brandverhalten der Formulierungen**

| Beispiel | V1 | 1 | 2 | V2 | V3 | 3 | V4 | 5 | 6 | 7 |
|---|---|---|---|---|---|---|---|---|---|---|
| Startzeit [s] | 17 | 15 | 15 | 15 | 16 | 15 | 17 | 16 | 16 | 16 |
| Abbindezeit [s] | 49 | 48 | 46 | 49 | 48 | 48 | 46 | 47 | 47 | 46 |
| Klebefreizeit [s] | 100 | 78 | 75 | 85 | 76 | 72 | 93 | 87 | 75 | 80 |
| Steigzeit [s] | 97 | 91 | 88 | 90 | 92 | 95 | 85 | 88 | 95 | 90 |
| | | | | | | | | | | |
| Rohdichte (kg/m³), Becher | 45,3 | 43,9 | 44,2 | 43,8 | 44,6 | 44,2 | 45,7 | 44,8 | 44,5 | 44,0 |
| Rohdichte (kg/m³), frei | 39,8 | 38,0 | 38,2 | 37,8 | 38,0 | 37,5 | 40,2 | 39,4 | 38,8 | 38,3 |
| DIN 4102, Kl. B2/B3 * | B2 | B2 | B2 | B2 | B2 | B2 | B2 | B2 | B2 | B2 |
| [cm] | 8,5 | 8,3 | 8,7 | 10,7 | 9,5 | 8,8 | 9,0 | 8,8 | 10,5 | 8,3 |
| | | | | | | | | | | |

| Druckfestigkeiten (N/mm²) | | | | | | | | | | |
|---|---|---|---|---|---|---|---|---|---|---|
| in Schäumricht. | 0,37 | 0,29 | 0,30 | 0,35 | 0,35 | 0,32 | 0,36 | 0,35 | 0,33 | 0,29 |
| quer zur Schäumricht. | 0,11 | 0,13 | 0,14 | 0,14 | 0,13 | 0,14 | 0,11 | 0,13 | 0,14 | 0,13 |
| Anisotropiefaktor Druck. | 3,36 | 2,23 | 2,14 | 2,50 | 2,70 | 2,28 | 3,27 | 2,67 | 2,36 | 2,2 |
| | | | | | | | | | | |

| Zelldurchmesser | | | | | | | | | | |
|---|---|---|---|---|---|---|---|---|---|---|
| in Schäumrichtung | 305 | 280 | 265 | 255 | 300 | 245 | 325 | 310 | 305 | 310 |
| quer zur Schäumrichtung | 397 | 343 | 330 | 330 | 375 | 325 | 392 | 370 | 360 | 355 |
| Mittelwert | 351 | 312 | 298 | 293 | 338 | 285 | 359 | 340 | 338 | 333 |
| | | | | | | | | | | |
| Wärmeleitfähigkeit (mW/mK) | 22,7 | 21,4 | 21,6 | 22,3 | 21,9 | 21,7 | 22,3 | 21,7 | 21,6 | 21,4 |

| | | | | | | | | | | |
|---|---|---|---|---|---|---|---|---|---|---|
| Der Anisotropiefaktor ist das Verhältnis der Werte in Schäumrichtung zu den Werten senkrecht zur Schäumrichtung Die Druckfestigkeiten wurden auf eine Rohdichte von 40 kg/m³ korrigiert. * Brandtest | | | | | | | | | | |

## Patentansprüche

1. Verfahren zur Herstellung von Hartschaumstoffen auf Isocyanatbasis durch Umsetzung von Polyisocyanaten mit Verbindungen, die mindestens zwei gegenüber Isocyanatgruppen reaktiven Wasserstoffatomen besitzen und von denen mindestens eine ein Polyesteralkohol ist, umfassend die Schritte
A) Umsetzung eines Polyesteralkohols oder eines mindestens einen Polyesteralkohol enthaltenden Polyolgemisches mit einem stöchiometrischen Unterschuss mindestens eines mindestens difunktionellen Isocyanats zu einem Urethangruppen und Hydroxylgruppen enthaltenden Prepolymeren, mit einer Hydroxylzahl im Bereich zwischen 100 und 400 mgKOH/g
B) Umsetzung des Prepolymeren aus Schritt A) mit Polyisocyanat zum Hartschaumstoff auf Isocyanatbasis.

2. Verfahren nach Anspruch 1, **dadurch gekennzeichnet, dass** das Prepolymere aus Schritt A) einen Anteil an Urethangruppen enthaltenden Verbindungen im Bereich von 1 bis 45 Gew.-%, bezogen auf das Prepolymere, aufweist.

3. Verfahren nach Anspruch 1, **dadurch gekennzeichnet, dass** das Prepolymere aus Schritt A) einen Anteil an Urethangruppen enthaltenden Verbindungen im Bereich von 1,5 bis 33 Gew.-%, bezogen auf das Prepolymere, aufweist.

4. Verfahren nach Anspruch 1, **dadurch gekennzeichnet, dass** als Isocyanate in Schritt A) Toluylendiisocyanat , Diphenylmethandiisocyanat und/oder Mischungen aus Diphenylmethandiisocyanat Polymethylen-polyphenylen-polyisocyanaten eingesetzt werden.

5. Verfahren nach Anspruch 1, **dadurch gekennzeichnet, dass** die Polyesteralkohole in Schritt A) durch Umsetzung von Phthalsäure, Terephthalsäure, Phthalsäureanhydrid, Adipinsäure und/oder Fettsäuren mit mindestens difuktionellen Alkoholen hergestellt werden.

6. Verfahren nach Anspruch 1, **dadurch gekennzeichnet, dass** in Schritt B) die Prepolymere aus Schritt A) im Gemisch mit weiteren Verbindungen mit mindestens zwei gegenüber den Isocyanatgruppen reaktiven Wasserstoffatomen eingesetzt werden.

7. Verfahren nach Anspruch 1, **dadurch gekennzeichnet, dass** in Schritt B) die Prepolymere aus Schritt A) im Gemisch mit Flammschutzmitteln, Katalysatoren, Treibmitteln sowie weiteren Hilfs- und Zusatzstoffen eingesetzt werden.

8. Urethangruppen und Hydroxylgruppen enthaltende Prepolymere mit einer Hydroxylzahl im Bereich zwischen 100 und 400 mgKOH/g, herstellbar durch Umsetzung mindestens eines mindestens einen Polyesteralkohol enthaltenden Polyolgemisches oder eines Polyesteralkohols mit einem stöchiometrischen Unterschuss mindestens eines mindestens difunktionellen Isocyanats.

9. Hartschaumstoffe auf Isocyanatbasis, herstellbar nach einem der Ansprüche 1 bis 8.

10. Verwendung von Hartschaumstoffen auf Isocyanatbasis nach Anspruch 9 als Kern von Sandwich- und Dämmelementen.

## Claims

1. A process for producing rigid foams based on isocyanates by reacting polyisocyanates with compounds which possess at least two hydrogen atoms capable of reacting with isocyanate groups and of which at least one is a polyester alcohol, which comprises the steps
A) reacting a polyester alcohol or a polyol mixture comprising at least one polyester alcohol with a stoichiometric deficiency of at least one at least bifunctional isocyanate to form a prepolymer comprising urethane groups and hydroxyl groups and having a hydroxyl number in the range from 100 to 400 mg koH/g,
B) reacting the prepolymer from step A) with polyisocyanate to give the rigid foam based on isocyanates.

2. The process according to claim 1, wherein the prepolymer from step A) has a proportion of compounds comprising urethane groups in the range from 1 to 45% by weight, based on the prepolymer.

3. The process according to claim 1, wherein the prepolymer from step A) has a proportion of compounds comprising urethane groups in the range from 1.5 to 33% by weight, based on the prepolymer.

4. The process according to claim 1, wherein tolylene diisocyanate, diphenylmethane diisocyanate and/or mixtures of diphenylmethane diisocyanate and polymethylenepolyphenylene polyisocyanates are used as isocyanates in step A).

5. The process according to claim 1, wherein the polyester alcohols in step A) are prepared by reacting phthalic acid, terephthalic acid, phthalic anhydride, adipic acid and/or fatty acids with at least bifunctional alcohols.

6. The process according to claim 1, wherein the prepolymers from step A) are used in step B) as a mixture with further compounds which have at least two hydrogen atoms capable of reacting with the isocyanate groups.

7. The process according to claim 1, wherein the prepolymers from step A) are used in step B) as a mixture with flame retardants, catalysts, blowing agents and further auxiliaries and additives.

8. A prepolymer which comprises urethane groups and hydroxyl groups and has a hydroxyl number in the range from 100 to 400 mg KOH/g and can be prepared by reacting at least one polyol mixture comprising at least one polyester alcohol or a polyester alcohol with a stoichiometric deficiency of at least one at least bifunctional isocyanate.

9. A rigid foam which is based on isocyanates and can be prepared according to any of claims 1 to 8.

10. The use of rigid foams based on isocyanates according to claim 9 as core of sandwich elements and insulation elements.

## Revendications

1. Procédé de fabrication de mousses dures à base d'isocyanate par réaction de polyisocyanates avec des composés qui possèdent au moins deux atomes d'hydrogène réactifs par rapport aux groupes isocyanate et dont au moins un est un polyesteralcool, comprenant les étapes suivantes :
A) réaction d'un polyesteralcool ou d'au moins un mélange de polyols contenant un polyesteralcool avec un déficit stoechiométrique d'au moins un isocyanate au moins difonctionnel pour l'obtention d'un prépolymère contenant des groupes uréthanne et des groupes hydroxyle, avec un indice hydroxyle dans l'intervalle compris entre 100 et 400 mg KOH/g;
B) réaction du prépolymère de l'étape A) avec un polyisocyanate pour l'obtention de la mousse dure à base d'isocyanate.

2. Procédé selon la revendication 1, **caractérisé en ce que** le prépolymère de l'étape A) présente une proportion de composés contenant des groupes uréthanne dans l'intervalle compris entre 1 et 45 % en poids, sur base du prépolymère.

3. Procédé selon la revendication 1, **caractérisé en ce que** le prépolymère de l'étape A) présente une proportion de composés contenant des groupes uréthanne dans l'intervalle compris entre 1,5 et 33 % en poids, sur base du prépolymère.

4. Procédé selon la revendication 1, **caractérisé en ce qu'**on utilise comme isocyanates à l'étape A) le toluylène diisocyanate, le diphénylméthane diisocyanate et/ou des mélanges de diphénylméthane diisocyanate polyméthylène-polyphénylène polyisocyanates.

5. Procédé selon la revendication 1, **caractérisé en ce que** les polyesteralcools à l'étape A) sont fabriqués par réaction d'acide phtalique, d'acide téréphtalique, d'anhydride d'acide phtalique, d'acide adipique et/ou d'acides gras ayant des alcools au moins difonctionnels.

6. Procédé selon la revendication 1, **caractérisé en ce qu'**à l'étape B), on utilise les prépolymères de l'étape A) en mélange avec d'autres composés ayant au moins deux atomes d'hydrogène réactifs par rapport aux groupes isocyanate.

7. Procédé selon la revendication 1, **caractérisé en ce qu'**à l'étape B), on utilise les prépolymères de l'étape A) en mélange avec des ignifugeants, des catalyseurs, des agents moussants ainsi que d'autres adjuvants et additifs.

8. Prépolymères contenant des groupes uréthanne et des groupes hydroxyle ayant un indice hydroxyle dans l'intervalle entre 100 et 400 mg KOH/g, qu'on fabrique par réaction d'au moins un mélange de polyols contenant au moins un polyesteralcool ou d'un polyesteralcool avec un déficit stoechiométrique d'au moins un isocyanate au moins difonctionnel.

9. Mousses dures à base d'isocyanate qu'on fabrique selon l'une des revendications 1 à 8.

10. Utilisation de mousses dures à base d'isocyanate selon la revendication 9 comme âmes d'éléments sandwichs et d'isolation.
